Europäisches Patentamt

European Patent Office

Office européen des brevets

(19)

(11) **EP 0 705 515 B1**

(12) **EUROPÄISCHE PATENTSCHRIFT**

(45) Veröffentlichungstag und Bekanntmachung des Hinweises auf die Patenterteilung:
**27.12.1996 Patentblatt 1996/52**

(21) Anmeldenummer: **94920368.1**

(22) Anmeldetag: **27.06.1994**

(51) Int Cl.[6]: **H04N 1/04**

(86) Internationale Anmeldenummer:
**PCT/DE94/00725**

(87) Internationale Veröffentlichungsnummer:
**WO 95/01042 (05.01.1995 Gazette 1995/02)**

(54) **VERFAHREN UND ANORDNUNG ZUR SYNCHRONISATION DER BILDAUFNAHME VON MONOCHROM- UND FARBAUFNAHMEN MIT PHOTOSENSITIVEN ZEILENSENSOREN**

PROCESS AND DEVICE FOR SYNCHRONISING THE PICKING-UP OF MONOCHROME AND COLOUR PICTURES BY MEANS OF PHOTOSENSITIVE LINE SENSORS

PROCEDE ET DISPOSITIF DE SYNCHRONISATION DE LA PRISE DE VUES MONOCHROMES ET EN COULEURS AU MOYEN DE CAPTEURS PHOTOSENSIBLES DE LIGNES

(84) Benannte Vertragsstaaten:
**AT BE CH DE ES FR GB IT LI NL SE**

(30) Priorität: **25.06.1993 DE 4321180**

(43) Veröffentlichungstag der Anmeldung:
**10.04.1996 Patentblatt 1996/15**

(73) Patentinhaber: **FIRMA F+O ELECTRONIC SYSTEMS GmbH
D-69239 Neckarsteinach (DE)**

(72) Erfinder:
- **AUER, Michael
  D-01187 Dresden (DE)**
- **GROSSMANN, Hans-Peter
  D-01309 Dresden (DE)**
- **IHLEFELD, Joachim
  D-01097 Dresden (DE)**
- **PESTER, Michael
  D-01454 Radeberg (DE)**
- **UHLIG, Günther
  D-01109 Dresden (DE)**
- **WENERT, Lutz
  D-01067 Dresden (DE)**

(74) Vertreter: **Mierswa, Klaus, Dipl.-Ing.
Friedrichstrasse 171
68199 Mannheim (DE)**

(56) Entgegenhaltungen:
| | |
|---|---|
| **EP-A- 0 142 358** | **EP-A- 0 150 029** |
| **EP-A- 0 301 506** | **WO-A-92/00574** |
| **DE-A- 4 130 941** | **US-A- 4 358 794** |
| **US-A- 4 453 170** | **US-A- 4 635 000** |
| **US-A- 4 801 978** | **US-A- 4 862 512** |

## Beschreibung

**Technisches Gebiet:**

Die Erfindung betrifft ein Verfahren zur Synchronisation der Bildaufnahme von Monochrom- und Farbaufnahmen mit lichtempfindlichen Sensoren gemäß dem Oberbegriff des Patentanspruchs 1 sowie eine Anordnung hierzu.

**Stand der Technik:**

Eine digitale Abtastung von relativ zur Bildaufnahmekamera bewegten Bildvorlagen wird technisch allgemein mit CCD-Zeilenkameras realisiert. Zur Synchronisation werden, insbesondere bei rotierenden Bildvorlagen, inkrementale Geber verwendet, deren Impulse direkt zur Belichtungssteuerung der Beleuchtungseinrichtung verwendet werden. Des weiteren werden aus diesen Impulsen die Steuersignale für einen Bildspeicher zur Speicherung der abgetasteten digitalen Bildwerte erzeugt.

Dieses Verfahren genügt für Anwendungen mit annähernd konstanter Transportgeschwindigkeit und dann, wenn nur geringe Anforderungen an die Aufnahmequalität gestellt werden. Bei Präzisionsanwendungen mit variabler Transportgeschwindigkeit kommt es bei der hier vorliegenden starren Kopplung zwischen den Impulsen des inkrementalen Gebers und dem Integrationstakt der CCD-Zeilenkamera zu Meßfehlern. Diese äußern sich in einer geschwindigkeitsabhängigen Phasenverschiebung in Transportrichtung zwischen dem Sollraster auf der Vorlage und dem tatsächlich gemessenen Istraster. Ferner wirken sich Teilungsfehler, mechanische Schwingungen und Phasenrauschen des inkrementalen Gebers sowie weitere Fehler direkt auf die Bildaufnahme aus. Für eine Reihe von Anwendungen ist ein in seinen Parametern Offset und Zeilenabstand frei programmierbares Raster erforderlich, das mit der bekannten starren Kopplung zwischen den Impulsen des inkrementalen Gebers und den Zeilenadressen nicht realisiert werden kann.

Dabei wird die Bildaufnahme mit einer oder mehreren zu einer längeren Zeile kombinierten CCD-Zeilenkameras realisiert. Insbesondere bei Präzisionsmessungen mit mehreren Farbkameras genügt der absolute Farbmeßfehler häufig nicht den Anforderungen.

Durch die EP-A-0301506 ist eine Bild-Abtast- und Lesevorrichtung bekanntgeworden, die aus einer eine Mehrzahl von Originalen tragenden transparenten Trommel besteht und Kalibrier-Bezugsbereiche aufweist, die beim Lesen der Originale als Referenzen dienen. Ein Abtastkopf tastet die rotierende Trommel ab. Eine Recheneinheit weist einen Speicher zum Abspeichern der Kalibrier-Bezugsbereiche der Trommel auf. Die Position der Kalibrier-Bezugsbereiche wird zeitlich vor dem Lesen der Originale gespeichert. Wenn der Abtastprozeß gestartet wird, wird der Abtastkopf zu der gespeicherten Position eines ersten Kalibrier-Bezugsbereiches bewegt, die Kalibrierung durchgeführt und das dazugehörige Original wird gelesen, indem die Kalibrierdaten abgelegt werden. Der Abtastvorgang eines jeden aufeinanderfolgenden Originals ist ähnlich dem vorhergegangenen durch Wiederkalibrierung mittels des korrespondierenden Bezugsbereichs, wobei jeder Kalibriervorgang während der Rotation der Trommel stattfindet.

Durch die US-A-4 635 000 ist ein Zeitgeber-Synchronisierungssystem mit zeitlichen Pixeln zur Phasenjitterkorrektur für eine optische Abtasteinrichtung bekanntgeworden, die eine kontinuierlich laufende Pixel-Zeitquelle, Schaltkreise zur Generierung von Fehlerregelsignalen mit Amplituden, die jeden Phasenfehler zwischen dem Beginn der Abtastung und dem Start der Pixel-Zählimpulse und jeden Phasenfehler zwischen dem Ende der Abtastung und dem Ende der Pixel-Zählimpulse repräsentieren, sowie Schaltkreise aufweisen einschließlich eines Schalter-Filterschaltkreises mit zwei Speicherelementen für jede Abschrägung des Polygons des Systems, um ein Frequenzkorrektursignal für die Pixel-Zeitquelle zu erzeugen.

Durch die EP-A-0 142 358 ist eine Abtasteinrichtung mit variabler Geschwindigkeit des Transports von Dokumenten zur Generierung von Daten, die Bilder auf dem Dokument darstellen, bekanntgeworden. Die Abtasteinrichtung umfaßt einen kompakten, zeitlich integrierenden Photo-Zeilendetektor und eine Einrichtung zur Generierung von zyklischen Signalen des Zeilendetektors, die die Bilder darstellen, sowie ein Dokumenten-Transportsystem zur Relativbewegung des Zeilendetektors bezüglich des Dokument, um aufeinanderfolgender Bilder des Zeilendetektors optisch zu erfassen, wobei die Daten in einer Synchronisierungseinrichtung verarbeitet werden.

Die Synchronisierungseinrichtung umfaßt eine auf die Bewegung des Dokuments relativ zum Zeilendetektor ansprechende Einrichtung, die jedesmal dann ein Steuersignal erzeugt, wenn das Dokument um eine vorgegebene Strecke bezüglich des Zeilendetektors bewegt worden ist. Ein Taktimpuls-Zeitzeichengenerator taktet den linearen Zeilendetektor. Logikbausteine sprechen auf die Steuersignale und die Taktimpuls-Zeitzeichen an, um für das Verfahren nur jene Signale durchzulassen, die durch den Zeilendetektor aufgrund des Auftretens einer vorgegebenen Beziehung zwischen den Erscheinungszeiten eines Steuerimpulses und eines Taktimpuls-Zeitzeichens generiert worden sind.

**Technische Aufgabe:**

Der Erfindung liegt die Aufgabe zugrunde, ein Verfahren zur Synchronisation der Bildaufnahme von Monochrom- und Farbaufnahmen mit photosensitiven Zeilensensoren gemäß der genannten Gattung zu schaffen, mit dem die Meßgenauigkeit für Monochrom- und Farbaufnahmen verbessert wird, wobei ebenfalls die Ausführung einer CCD-Zeilenkamera hinsichtlich der Meßgenauigkeit für Monochrom- und Farbaufnahmen verbessert sein soll.

Offenbarung der Erfindung und deren Vorteile:

Die Lösung der Aufgabe besteht erfindungsgemäß darin, daß das Zeilenraster durch eine programmierbare Zählanordnung, die einen Meßzeilenzähler (CT2) und einen diesem vorgeschalteten weiteren Zähler (CT1) umfaßt, erzeugt wird und der Rechner und die programmierbare Zählanordnung zum Zeitpunkt des Eintreffens eines Impulses des inkrementalen Gebers die Phasenlage des durch die Zählanordnung erzeugten Zeilenrasters mißt, diese mit einem zugeordneten errechneten oder tabellierten Sollwert einer Sollwerttabelle vergleicht und die so erhaltene Phasendifferenz benutzt, um den dem Meßzeilenzähler (CT2) vorgeschalteten Zähler (CT1) in seinem Zählumfang zu beeinflussen, um daraus die exakte Lage von Meßzeilen zu generieren. Der Timer zerlegt die Meßzeilen der Bildaufnahmeeinrichtung in zwei oder mehr Abtastzeilen, wenn die Integrationszeit des lichtempfindlichen Sensors innerhalb der Meßzeile eine Belichtung oberhalb der Aussteuerungsgrenze des Sensors ergibt.

Das Verfahren und die Anordnung besitzen den Vorteil, daß diese ein in seinen Parametern Bildanfang und Zeilenbreite frei programmierbares und geometrisch entzerrtes Raster über die aufzunehmende Bildvorlage zur Verfügung stellen, das weitestgehend von einem störenden Phasenjitter befreit ist. Das Raster ist in seinen Parametern Offset und Zeilenabstand frei programmierbar, so daß die starre Kopplung zwischen den Impulsen eines inkrementalen Gebers und den Zeilenadressen aufgehoben ist.

Kurzbeschreibung der Zeichnung, in der zeigen:

Figur 1    eine Prinzipdarstellung der Synchronisationsanordnung mit einem inkrementalen Geber

Figur 2a    eine Hardwarestruktur

Figur 2b    das Timing

Figur 3    die Ableitung der CCD-Integrationstakte

Figur 4a    eine Anordnung zur Ableitung der CCD-Impulse

Figur 4b    eine Anordnung zur Signalverarbeitung

Figur 5    die Definition einer Meßzeile zwischen zwei Triggerpunkten des inkrementalen Gebers mit dazwischenliegenden Abtastzeilen, z. B. 1024 pro Bild und

Figur 6    eine Anordnung von CCD-Zeilenkameras, der optischen Objektive und der Beleuchtungsquellen in bezug auf die Bildvorlage.

Wege zu Ausführung der Erfindung:

Die Funktionsweise des erfindungsgemäßen Verfahrens und die Anordnung der CCD- Zeilenkamera sollen in einem Ausführungsbeispiel an den folgenden Darstellungen im Zusammenhang mit dem Betrieb als Bildaufnahmekamera an einer Druckmaschine mit einem Druckzylinder I erläutert werden.

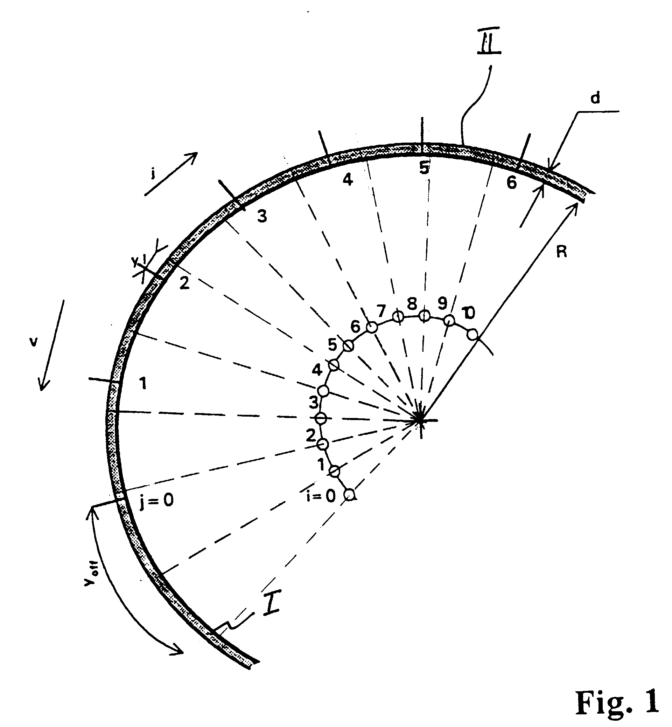

Figur 1 zeigt die Lage der bereits vorverarbeiteten Impulse eines inkrementalen Gebers. Jeder der dargestellten kleinen Kreise 0 bis 10 entspricht einem mit i indizierten Impuls des inkrementalen Gebers. Auf der Oberfläche des Zylinders I erfolgt der Papiertransport, das Papier II mit der Dicke d ist schraffiert dargestellt. Die bedruckte Oberfläche des Papiers soll nun nach einem Offset $y_{off}$ mit einem Zeilenabstand yb durch eine CCD-Zeilenkamera aufgenommen werden. Die Zeilen werden mit dem Index j versehen. Im allgemeinen sind Zeilen und Inkremente nicht identisch. Um Rundungsfehler zu vermeiden, wird zu jeder Flanke des inkrementalen Gebers nicht nur der ganze sondern auch der gebrochen rationale Teil der Zeilenadresse ausgewertet.

Mit jeder Flanke des inkrementalen Gebers wird ein Phasenvergleich zwischen der Lage des Druckzylinders und der aktuellen Lage des Zeilenrasters durchgeführt. Dabei gilt folgende Beziehung:

$$\bar{\varphi}_i * (R + k*d) = y_{off} + j * yb + yl \qquad (1)$$

mit:

$\bar{\varphi}_i$ -    Erwartungswert des Winkels vom inkrementalen Geber

2R -    Durchmesser des Zylinders

k -    Konstante $0 < k < 1$

d -    Papierdicke

yb -    Zeilenbreite

j -    Zeilenindex, Zeilenadresse

yl -    gebrochen rationaler Teil der Zeilenadresse

Unter der theoretischen Annahme, daß die Transportgeschwindigkeit konstant ist und der inkrementale Geber keinen Meßfehler liefert, könnte man nach der Gleichung (1) zu jeder Flanke des inkrementalen Gebers die Istphase des Rasters mit dem Zeilenindex j und dem gebrochen rationalen Teil yl ermitteln und mit der Sollphase vergleichen und damit einen freischwingenden Generator für die Zeilenfrequenz synchronisieren.

Für den praktisch wichtigen Fall, daß der inkrementale Geber keine äquidistante Impulsfolge liefert, sei es durch mechanische Störgrößen am Druckzylinder oder durch Meßfehler, die zum Beispiel durch mechanische Übertragungsfehler oder durch Fertigungstoleranzen der Strichscheibe des Gebers verursacht werden, folgen daraus Schwankungen der Zeilenbreite und Zeilenlage, die aufgrund der hohen Empfindlichkeit zu fehlerhaften Systemreaktionen führen können. Deshalb werden zunächst die systematischen Komponenten dieser Fehler in einem Teach-in-Prozeß angelernt.

Dazu werden in einem Rechner die Erwartungswerte für die Winkel $\bar{\varphi}_i$ über mehrere Umdrehungen gemit-

telt und in einer Tabelle abgelegt. Aus diesen Erwartungswerten werden für jeden Impuls des inkrementalen Gebers die Sollwerte des ganzen und gebrochen rationalen Teils der Zeilenadresse nach Gleichung (1) berechnet. Diese so ermittelte Tabelle wird im Rechner gehalten und für jeden neuen Parametersatz ($y_{off}$, k, d, yb) neu nach Gleichung (1) erstellt.

Um Geometriefehler zu korrigieren, kann die Zuordnung des Erwartungswertes des Winkels $\bar{\varphi}_i$ und y, $\frac{yl}{yb}$ auch mit einer nichtlinearen Korrekturfunktion überlagert sein. Der Parameter k ist eine materialabhängige Größe. Dieser Parameter wird gemeinsam mit $y_{off}$ verwendet, um die exakte Lage des Rasters am Bildanfang und Bildende zu gewährleisten.

Neben dem Durchmesser 2R des Druckzylinders I geht noch eine Korrekturgröße kxd ein, die von der Papierdicke d und von Materialparametern abhängt. Diese Korrektur ermöglicht es, von der Papierdicke d unabhängige Bilder zu erzeugen, die kongruent zu offline-Bilddaten eines Flachbettscanner sind und direkt zu einem Soll/Ist-Bildvergleich genutzt werden können.

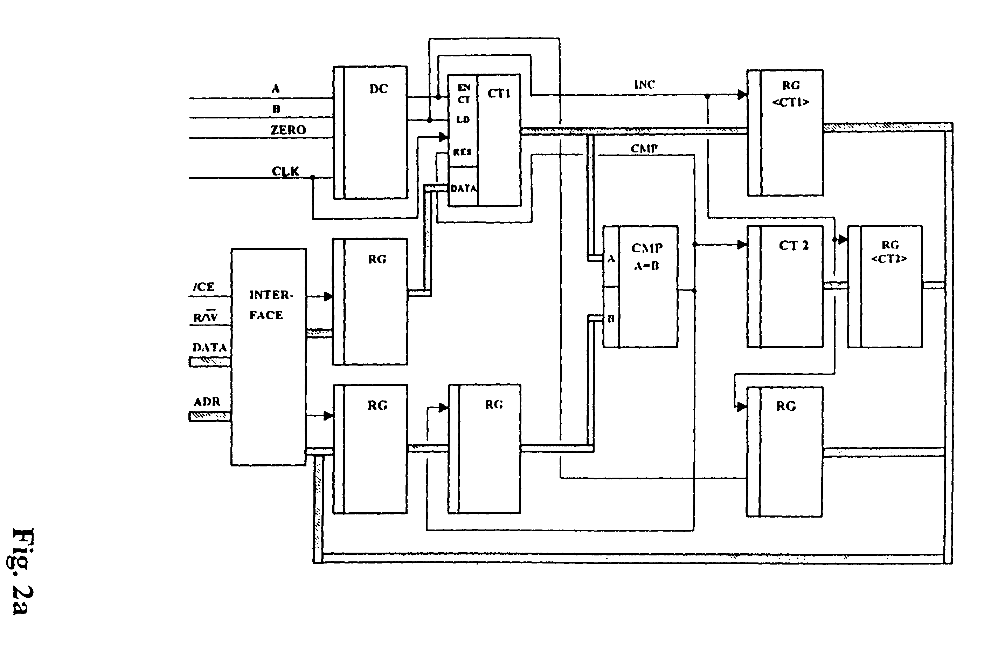

Die praktische Realisierung wird in einer Anordnung nach Figur 2a erläutert. Ein Dekoder DC erzeugt aus den Ausgangssignalen des inkrementalen Gebers Takt(INC)- und Rücksetz(ZERO)-Impulse. Diese Impulse steuern einen ersten, mit einer hohen Frequenz CLK getakteten Zähler CT1, dessen Zählumfang durch ein Interface INTERFACE programmiert werden kann. Beim Durchlaufen des Nulldurchgangs ZERO des inkrementalen Gebers wird dieser Zähler CT1 auf einen ebenfalls programmierbaren Wert gesetzt und ein Zähler CT2 rückgesetzt. Der Zählumfang kann mit jedem Takt des inkrementalen Gebers korrigiert werden. Immer dann, wenn CT1 einen Übertragsimpuls generiert, erhöht der Zähler CT2 um 1. Mit dem Impuls des inkrementalen Gebers werden ferner die aktuellen Zählerstände von CT1 und CT2 in Registern zwischengespeichert, ebenso der Nulldurchgang ZERO. Der gleiche Impuls löst am angeschlossenen Mikrorechner ein Steuersignal aus, so daß dieser die Zählerstände von CT1 und CT2 sowie ZERO übernehmen kann. Die Zählerstände entsprechen dem gebrochen rationalen und ganzen Teil der Zeilenadresse für die Bildaufnahme. Ferner ist dem Rechner durch Mitzählen der Index i des aktuellen Inkrements des inkrementalen Gebers bekannt.

Mit den so gewonnenen Meßwerten berechnet der Mikrorechner in Echtzeit eine Phasendifferenz aus Soll- und Istphase nach Gleichung (2):

$$y(t) = yi(CT2) - j + y(CT1)/yz - \frac{yl}{yb} \qquad (2)$$

mit:

$y_i(CT2)$ - aktueller Inhalt des Zeilenzählers CT2, gepuffert zum Zeitpunkt des i-ten Impulses des inkrementalen Gebers im zugeordneten Register,

j - Sollwert des Zeilenzählers aus der Tabelle

$y(CT1)$ - aktueller Inhalt des Zählers CT1 zum Zeitpunkt des i-ten Impulses

yz - aktueller im zugeordneten Register geladener Zählumfang von CT1

yl - Sollwert des gebrochen rationalen Teils der Zeilenadresse aus der Tabelle

yb - Zeilenbreite

Diese Phasendifferenz $\Delta y(t)$ wird über ein gleitendes Mittelwertfilter nach der nachstehenden Gleichung (3) geglättet, und aus diesem Wert wird eine neue aktuelle Zeilenlänge nach der nachfolgenden Gleichung (4) errechnet, die über das Interface an CT1 ausgegeben wird:

$$\Delta y_m(i) = \tau * \Delta y_i + \Delta y_m(i-1) \qquad (3)$$

mit:

$\Delta y_m(i)$ - gleitender Mittelwert

$\tau$ - Zeitkonstante

$$\langle RG(y_z) \rangle := \langle RG(y_z) \rangle + \gamma * \Delta y_m(i) \qquad (4)$$

mit:

$\langle RG(y_z) \rangle$ - Inhalt des VO-Registers zur Steuerung des Zählumfangs von CT1

$\gamma$ - Regelverstärkung

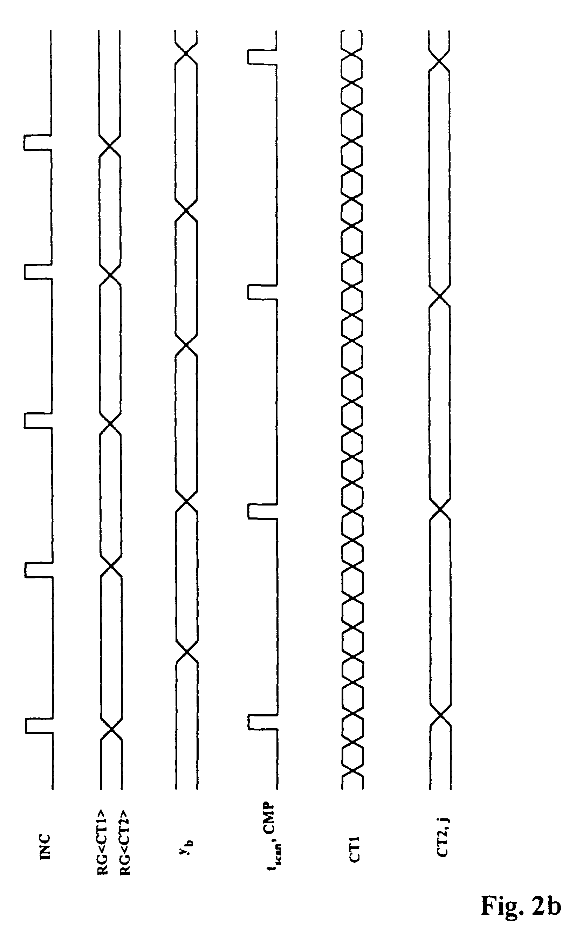

Durch die Ausgabe des nach Gleichung (4) berechneten Ergebnisses auf das Register $RG(y_z)$ ist der Regelkreis geschlossen; das zugehörige Timing ist im Diagramm der Figur 2b dargestellt.

Nach dem beschriebenen Verfahren ist es möglich, ein in seinen Parametern Bildanfang und Zeilenbreite frei programmierbares und geometrisch entzerrtes Raster über die aufzunehmende Bildvorlage bereitzustellen, das weitestgehend von einem störenden Phasenjitter befreit ist.

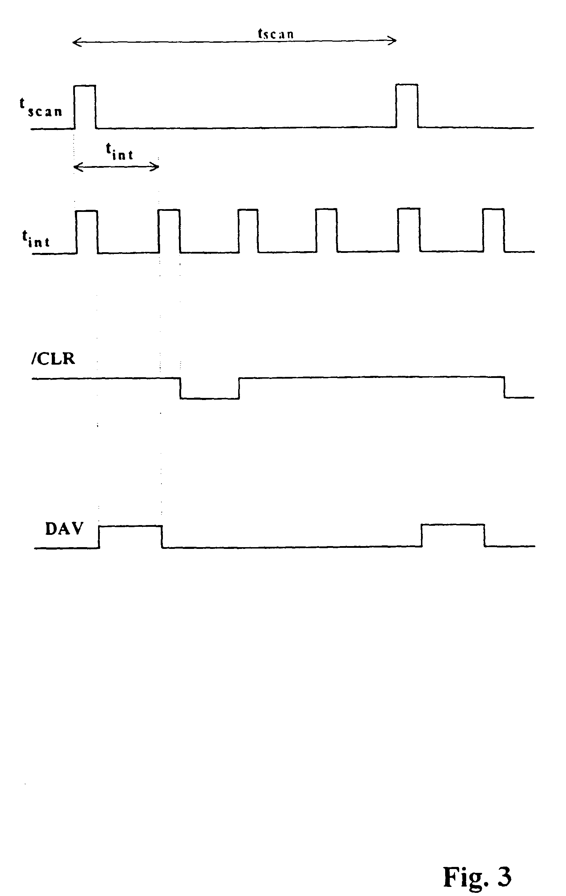

Nachfolgend wird auf die Figuren 3 bis 4b Bezug genommen. Bei variablen Transportgeschwindigkeiten führt eine der Zeilenbreite angepaßte Integrationszeit zu einer von der Transportgeschwindigkeit abhängigen Empfindlichkeit der Anordnung, die vielfach den Dynamikbereich der CCD-Zeile überschreitet. Bekannte Verfahren und Anordnungen, wie das Einschieben eines Graukeils oder das Ändern der Beleuchtungsstärke, sind für Präzisionsanwendungen aufgrund der relativ hohen Fehler ungeeignet.

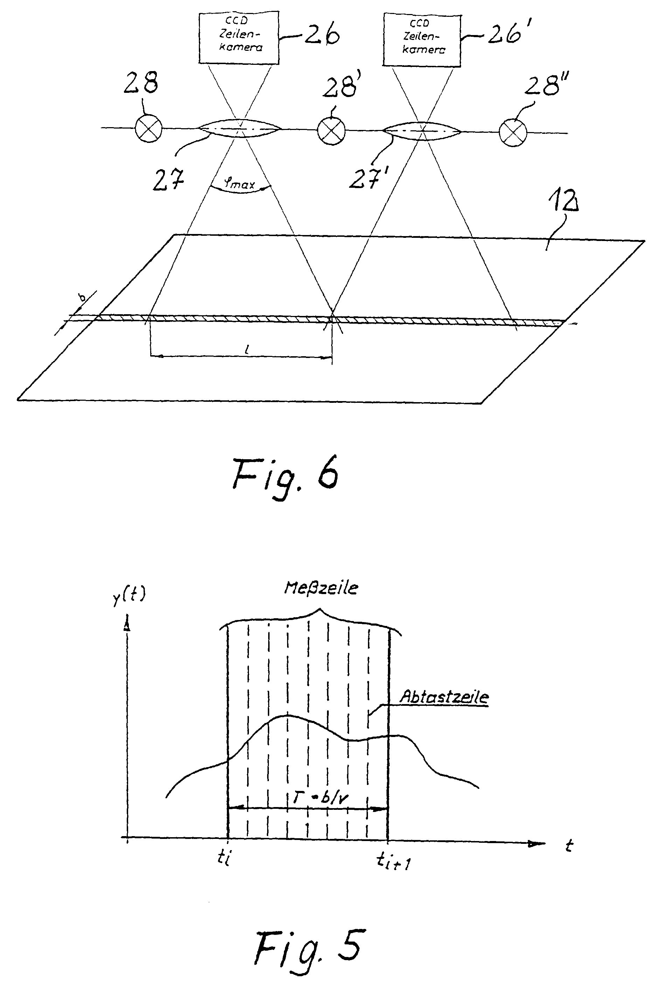

Deshalb wird eine Meßzeile auf dem Objekt in mehrere aufeinanderfolgende Abtastzeilen unterteilt, sofern der zulässige Dynamikbereich überschritten wird. Die Meßzeile wird dabei in n gleichgroße Abtastzeilen zerlegt, was in Figur 5 gezeigt ist. Eine Meßzeile liegt zwischen zwei Triggerpunkten $t_i$ und $t_{i+1}$ des inkrementalen Gebers, wobei jeder Triggerpunkt den Zeilenbeginn markiert. Zwischen der Meßzeile b liegt eine Anzahl von Abtastzeilen mit der effektive Integrationszeit $T = b/v$. Dazu wird auf das Bildfeld ein Raster mit dem Pixelabstand $b*b$, zum Beispiel mit $b \approx 3$ mm, gelegt und die Impulse des inkrementalen Gebers am Transportzylinder ausgewertet. Zu Beginn jeder Meßzeile wird ein Triggerimpuls eines Timers ausgelöst. Aufgrund der variablen Transportgeschwindigkeit ergibt sich die Forderung nach einer Empfindlichkeitsregelung der CCD-Zeile(n) der CCD-Kamera, die vorzugsweise digital erfolgt.

In Figur 3 ist erläutert, daß auf der Grundlage der Messung der Zeitdauer des jeweils vorangegangenen Intervalls eine Schätzung der optimalen Aufteilung des Integrationsregimes für die aktuelle Meßzeile bestimmt wird. Der bereits beschriebene Rechner, vorzugsweise ein Mikrorechner, liest die Zeitdauer der vorangegangenen Meßzeile und berechnet daraus die Intervalle der Abtastzeilen nach Gleichung (5):

$$\langle RG(t_{int})\rangle := t_{scan} / [1 + int(t_{scan}/t_{intmax})] \qquad (5)$$

mit:

int -          Funktion Integer, ganzer Teil von
$t_{int}$ -          Integrationszeit der CCD- Zeile
$t_{scan}$ -          Abtastzeit für eine Meßzeile
$t_{int\ max}$ -          maximale, durch Aussteuerung begrenzte Integrationszeit der CCD- Zeile

Diese Abtastzeilen werden anschließend bildpunktweise im Rahmen der Meßzeile akkumuliert, die entsprechenden Dunkelstromwerte subtrahiert; anschließend wird der so erhaltene Wert durch die effektive Integrationszeit dividiert. Der Vorteil dieses Verfahrens liegt in einem hohen Signal/ Rauschverhältnis, insbesondere während des Teach-in's bei niedrigen Transportgeschwindigkeiten. Ein weiterer Vorteil besteht in der Konstanz der Apertur des einzelnen Bildpunktes, so daß sich eine verbesserte Meßgenauigkeit der Bilddetails mit hohem Kontrast ergibt.

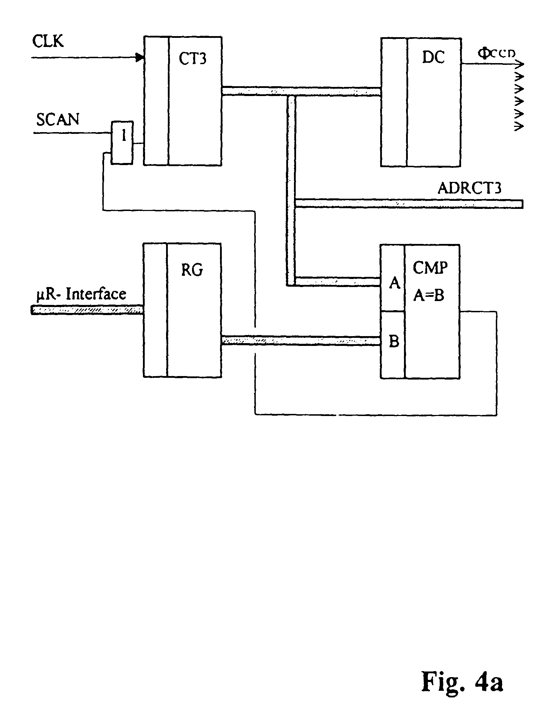

Eine mögliche schaltungsstechnische Realisierung ist in Figur 4a dargestellt und anschließend erläutert. Ein mit hoher Taktfrequenz CLK betriebene Zähler CT3 wird mit jeder steigenden Flanke des Integrationstaktes der Meßzeilen rückgesetzt und zählt dann eine von $RG(t_{int})$ programmierbare Anzahl von Takten. Die Ausgänge von CT3 sind fest mit dem Taktregime der CCD-Zeilen verbunden, so daß ein Decoder DC direkt die zum Betrieb der Zeilen notwendigen Takte erzeugt.

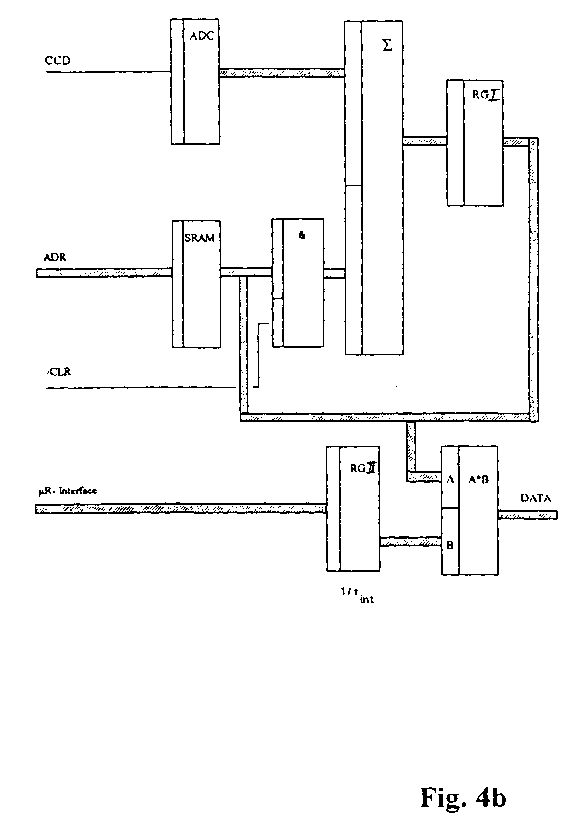

Die an den Ausgängen der CCD-Zeilen erhaltenen Analogspannungen werden nach einer doppelt korrelierter Abtastung in bekannter Weise in digitale Signale gewandelt. Die so erhaltenen digitalisierten Abtastwerte werden bildpunktweise akkumuliert; eine der möglichen Ausführungen hierzu zeigt Figur 4b.

Die Daten gelangen von einem Analog/Digitalwandler ADC auf einen Dateneingang eines zum Beispiel 16 bit breiten Adders $\Sigma$. Dessen anderer Dateneingang ist über eine AND-Verknüpfung & mit dem Ausgang eines SRAM's verbunden. Die Adressen des SRAM's werden von CT3 gemäß Figur 4a bereitgestellt. Der Ausgang des Adders $\Sigma$ kann über ein Register RGI auf den Datenbus des SRAM's geschaltet werden.

Nach der jeweils ersten im Taktregime definierten Abtastzeile innerhalb einer Meßzeile erscheinen die ersten gültigen Daten der neuen Meßzeile. Diese werden direkt in den SRAM geschrieben, indem über die AND-Verknüpfung eine Null an einem Eingang des Adders $\Sigma$ erzwungen wird. Mit der nächsten Abtastzeile schaltet die AND-Verknüpfung die Daten durch, es wird akkumuliert. Die akkumulierten Daten sind jeweils in der ersten Abtastzeile der darauffolgenden Meßzeile gültig. Am Ausgang des dem Adder $\Sigma$ nachgeschalteten Registers folgt ein 16-bit-Eingang eines Multiplizierers $A*B$, vorzugsweise ein Hardwaremultiplizierer; der andere Eingang ist mit einem weiteren Register RGII verknüpft, in das vom Mikrorechner der reziproke Wert der effektiv wirkenden Integrationszeit über einer Meßzeile geschrieben wird. Am Ausgang des Multiplizierers entstehen die normierten Daten DATA, die in üblicher Weise weiterverarbeitet werden können.

Eine andere Ausführungsform, die bei vereinfachter Realisierung eine gute Näherung erbringt, besteht darin, daß die Belichtungszeit der CCD-Zeile bei sämtlichen Transportgeschwindigkeiten konstant gehalten wird. Dazu ist es erforderlich, den Offset des Rasters $y_{off}$ geschwindigkeitsproportional zu verschieben. Die Offseteänderung $\Delta y_{off}$, das heißt die Verschiebung des Startzeitpunktes für die Integration in Laufrichtung, ergibt sich nach einfachen geometrischen Betrachtungen aus der halben Zeit einer Abtastzeile vermindert um die halbe konstante Integrationszeit der CCD-Zeile. Dabei bleibt die Lage der Schwerpunkte der abgetasteten Zeilen erhalten. Die Offseteänderung $\Delta y_{off}$ ergibt sich zu:

$$\Delta y_{off} = yb/2 - v * t_{int}/2 \qquad (6)$$

mit:

v -          Transportgeschwindigkeit

Ein angepaßtes Verfahren und eine Anordnung zur Durchführung einer Farbmessung mit m Kanälen und mehreren Meßmodulen, unter Verwendung von Sensorzeilen zur Aufnahme von relativ zum Sensor bewegten Objekten ist durch folgende Merkmale gekennzeichnet: a) das Objekt wird über n erste Objektive in n Meßmodulen auf n zeilenförmigen Bildleitern abgebildet, b) die n Bildleiter werden ausgangsseitig so zu einem optischen Steckverbinder zusammengefügt, daß die n zeilenförmigen Bildleiter eine reguläre Schichtstruktur bilden, c) die Ausgänge der Bildleiter werden über ein optisches Relaissystem (Empfangsoptik) auf m Sensoren über zweite und gegebenenfalls weitere Objektive, Strahl- und/oder Farbteiler und/oder Farbfilter, abgebildet, d) jeder der m Sensoren besteht aus einer regulären Struktur mit mindestens n fotoempfindlichen Zeilen oder e) das Objekt wird über n erste Objektive in m Meßmodulen auf n zeilenförmige Bildleiter, die aus m Schichten bestehen, abgebildet, f) die m∗n Ausgänge der Bildleiter in m Steckverbinder werden mit einer regulären Schichtstruktur so zusammengefaßt, daß genau ein Bildleiter aus jedem Meßkopfmodul im jeweiligen Steckverbinder enthalten ist, g) jeder der m optischen Steckverbinder wird über ein optisches System aus zweien und gegebenenfalls weiteren Objektiven und/oder Farbfiltern auf einen der Sensoren abgebildet, h) jeder der m Sensoren besteht aus einer regulären Struktur mit mindestens n fotoempfindlichen Zeilen.

Des weiteren besteht eine Anordnung zur zeilenweisen Synchronisation der Bildaufnahme von Monochrom- und Farbaufnahmen mit photosensitiven Zeilen von relativ zu einem Sensor bewegten Objekten, aus einem Timer, einem Rechner und einem inkrementalen Geber. Eine programmierbare Zählanordnung, die ein Zeilenraster erzeugt und der Timer mißt mit Hilfe des Rechners und der programmierbaren Zählanordnung zum Zeitpunkt des Eintreffens eines Impulses des inkrementalen Gebers die Phasenlage des durch die Zählanordnung erzeugten Zeilenrasters und vergleicht diese mit einem zugeordneten errechneten oder tabellierten Sollwert einer Sollwerttabelle und benutzt die so erhaltene Phasendifferenz, um einen dem Zeilenzähler CT2 vorgeschalteten Zähler in seinem Zählumfang zu beeinflussen (Figur 1 und Figur 2). Der Timer zerlegt die Meßzeilen der Bildaufnahmeeinrichtung in zwei oder mehr Abtastzeilen, wenn die Integrationszeit der photosensitiven Zeilen innerhalb der Meßzeile eine Belichtung oberhalb der Aussteuerungsgrenze der Sensoren ergibt.

Die CCD-Zeilenkamera kann aus mehreren kompakten Kameramodulen bestehen, die nebeneinander angeordnet sind, was in Figur 6 gezeigt ist. Die Bildaufnahme erfolgt mittels CCD-Zeilen, entweder Monochrom- oder Farbzeilen, von CCD-Kameras 26, 26', die parallel zur Achse des Transportzylinders angeordnet sind. Die optische Abbildung kann vorzugsweise durch schwingungsfeste Weitwinkelobjektive 27, 27' mit fester Blende und festem Metergang realisiert werden. Das Objektivshading von etwa 40 % wird durch geeignete Verteilung von Beleuchtungsquellen 28, 28', 28" zumindest teilkompensiert, die abwechselnd zwischen den Objektiven 27, 27' angeordnet sind.

Als Abmessungen der Bildelemente wird vorzugsweise ein Meßfeld von ca. 3 x 3 mm gewählt bei einer maximalen Transportgeschwindigkeit der Bildvorlage 12 $v_{max}$ = 10 m/s, wobei eine höhere geometrische Auflösung prinzipiell möglich ist möglich, jedoch die Kosten beträchtlich steigert oder die maximale Transportgeschwindigkeit einschränkt. Das Optimum für die Auflösung der Zeilenkamera liegt bei 1024 pixel; vorzugsweise werden die Beleuchtungsquellen 28, 28', 28" einzeln geregelt.

Gewerbliche Anwendbarkeit und Nützlichkeit:

Die Erfindung ist bevorzugt in der Drucktechnik beim Betrieb als Bildaufnahmekamera an einer Druckmaschine zur Abtastung von relativ zu einer Bildaufnahmekamera bewegten Bildvorlagen und deren Synchronisation anwendbar. Die Nützlichkeit der Erfindung besteht darin, daß diese ein in seinen Parametern Bildanfang und Zeilenbreite frei programmierbares und geometrisch entzerrtes Raster über die aufzunehmende Bildvorlage zur Verfügung stellt, das weitestgehend von einem störenden Phasenjitter befreit ist. Das Raster ist in seinen Parametern Offset und Zeilenabstand frei programmierbar, so daß die starre Kopplung zwischen den Impulsen eines inkrementalen Gebers und den Zeilenadressen aufgehoben ist. Ebenso ist die Konstanz der Apertur des einzelnen Bildpunktes vorteilhaft, so daß sich eine verbesserte Meßgenauigkeit der Bilddetails mit hohem Kontrast ergibt.

**Patentansprüche**

1. Verfahren zur zeilenweisen Synchronisation der Bildaufnahme von Monochrom- und Farbaufnahmen mit lichtempfindlichen Sensoren (26,26'), relativ zu denen sich ein abzutastendes Objekt (II) bewegt, unter Verwendung eines Timers, eines Rechners und eines Impulse erzeugenden inkrementalen Gebers, wobei ein Zeilenraster als Sollraster erzeugt wird,
dadurch gekennzeichnet,
daß das Zeilenraster durch eine programmierbare Zählanordnung, die einen Meßzeilenzähler (CT2) und einen diesem vorgeschalteten weiteren Zähler (CT1) umfaßt, erzeugt wird und der Rechner und die programmierbare Zählanordnung zum Zeitpunkt des Eintreffens eines Impulses des inkrementalen Gebers die Phasenlage des durch die Zählanordnung erzeugten Zeilenrasters mißt, diese mit einem zugeordneten errechneten oder tabellierten Sollwert einer Sollwerttabelle vergleicht und die so erhaltene Phasendifferenz benutzt, um den dem Meßzeilenzähler (CT2) vorgeschalteten Zähler (CT1) in seinem Zählumfang zu beeinflussen, um daraus die exakte Lage von Meßzeilen zu generieren.

2. Verfahren nach Anspruch 1, dadurch gekennzeichnet,
daß der Timer die Meßzeilen in zwei oder mehr Abtastzeilen zerlegt, wenn die Integrationszeit des lichtempfindlichen Sensors (26,26') innerhalb der Meßzeile eine Belichtung oberhalb der Aussteuerungsgrenze des Sensors ergibt.

3.  Verfahren nach Anspruch 1 oder 2, dadurch gekennzeichnet,
    daß der Timer die Phase der Takte des lichtempfindlichen Sensors so verschiebt, daß der Schwerpunkt der Gewichtsfunktion der Empfindlichkeit der Abtastzeile bei variabler Transportgeschwindigkeit des Objektes (II) örtlich konstant über der jeweiligen abzutastenden Bildzeile bleibt.

4.  Verfahren nach Anspruch 1, dadurch gekennzeichnet,
    daß mit jeder Flanke eines Impulses des inkrementalen Gebers ein Phasenvergleich zwischen der Lage des bewegten Objektes, beispielsweise Druckzylinder (II), und der aktuellen Lage des Zeilenrasters durchgeführt wird.

5.  Verfahren nach Anspruch 4, dadurch gekennzeichnet,
    daß der Phasenvergleich gemäß folgender Beziehung durchgeführt wird:

$$\overline{\varphi}_i * (R + k * d) = y_{off} + j * yb + yl \qquad [1]$$

mit:

$\overline{\varphi}_i$ -  Erwartungswert des Winkels vom inkrementalen Geber
2R -  Durchmesser des Zylinders
k -  Konstante $0 < k < 1$
d -  Papierdicke
$y_b$ -  Zeilenbreite
j -  Zeilenindex, Zeilenadresse
$y_l$ -  gebrochen rationaler Teil der Zeilenadresse
$y_{off}$ -  Offset

6.  Verfahren nach Anspruch 4, dadurch gekennzeichnet,
    daß zur Vermeidung von Rundungsfehlern zu jeder Flanke eines Impulses des inkrementalen Gebers sowohl der ganze als auch der gebrochen rationale Teil der Zeilenadresse ausgewertet wird.

7.  Verfahren nach Anspruch 5 und 6, dadurch gekennzeichnet,
    daß die systematischen Komponenten der Fehler in einem Teach-in-Prozeß angelernt werden und dazu in einem Rechner die Erwartungswerte für die Winkel $\overline{\varphi}_i$ über mehrere Umdrehungen gemittelt und in einer Tabelle abgelegt werden, wobei aus den Erwartungswerten für jeden Impuls des inkrementalen Gebers die Sollwerte des ganzen und gebrochen rationalen Teils der Zeilenadresse nach Gleichung [1] berechnet werden, die so ermittelte Tabelle im Rechner gehalten und für jeden neuen Parametersatz ($y_{off}$, k, d, yb) neu nach Gleichung [1] erstellt wird.

8.  Verfahren nach Anspruch 7, dadurch gekennzeichnet,
    daß zur Korrektur von Geometriefehlern die Zuordnung des Erwartungswertes des Winkels $\overline{\varphi}_i$ und $y_{off}$, $\frac{yl}{yb}$ mit einer nichtlinearen Korrekturfunktion überlagert wird.

9.  Verfahren nach Anspruch 1, dadurch gekennzeichnet,
    daß die Phasendifferenz $\Delta y(t)$ über ein gleitendes Mittelwertfilter nach der nachstehenden Gleichung [3] geglättet und aus diesem Wert eine neue aktuelle Zeilenlänge nach der nachfolgenden Gleichung [4] errechnet wird, die über das Interface an den Zähler (CT1) ausgegeben wird, wobei die Phasendifferenz $\Delta y(t)$ nach der nachstehenden Gleichung [3]

$$\Delta y_m(i) = \tau * \Delta y_i + \Delta y_m(i-1) \qquad [3]$$

mit:

$\Delta y_m(i)$ -  gleitender Mittelwert
$\tau$ -  Zeitkonstante

geglättet und die neue aktuelle Zeilenlänge nach der nachfolgenden Gleichung [4]

$$\langle RG(y_z) \rangle := \langle RG(y_z) \rangle + \gamma * \Delta y_m(i) \qquad [4]$$

mit:

$\langle RG(y_z) \rangle$ -  Inhalt des I/O-Regisers zur Steuerung des Zählumfangs von CT1
$\gamma$ -  Regelverstärkung

errechnet wird.

10. Verfahren nach Anspruch 1, dadurch gekennzeichnet,
    daß auf der Grundlage der Messung der Zeitdauer der jeweils vorangegangenen Meßzeile eine Schätzung der optimalen Aufteilung des Integrationsregimes für die aktuelle Meßzeile bestimmt wird, wobei der Rechner die Zeitdauer der vorangegangenen Meßzeile liest und daraus die Intervalle der Abtastzeilen berechnet, die anschließend bildpunktweise im Rahmen der Meßzeile akkumuliert und die entsprechenden Dunkelstromwerte subtrahiert werden und der so erhaltene Wert durch die effektive Integrationszeit dividiert wird.

11. Verfahren nach Anspruch 10, dadurch gekennzeichnet,
daß die Intervalle der Abtastzeilen der Meßzeile nach Gleichung [5]

$$\langle RG(t_{int})\rangle := t_{scan} / [1 + int(t_{scan}/t_{intmax})] \quad [5]$$

mit:

int -          Funktion Integer, ganzer Teil von
$t_{int}$ -          Integrationszeit der CCD- Zeile
$t_{scan}$ -          Abtastzeit für eine Meßzeile
$t_{int\,max}$ -          maximale, durch Aussteuerung begrenzte Integrationszeit der CCD-Zeile

berechnet werden.

12. Verfahren nach Anspruch 1, gekennzeichnet durch folgende Merkmale:

a) das Objekt wird über n erste Objektive in n Meßmodulen auf n zeilenförmigen Bildleitern abgebildet,

b) die n Bildleiter werden ausgangsseitig so zu einem optischen Steckverbinder zusammengefügt, daß die n zeilenformigen Bildleiter eine reguläre Schichtstruktur bilden,

c) die Ausgänge der Bildleiter werden über ein optisches Relaissystem auf m Sensoren über zweite und gegebenenfalls weitere Objektive, Strahl- und/oder Farbteiler und/oder Farbfilter, abgebildet,

d) jeder der m Sensoren besteht aus einer regulären Struktur mit mindestens n fotoempfindlichen CCD-Zeilen
oder

e) das Objekt wird über n erste Objektive in m Meßmodulen auf n zeilenförmige Bildleiter, die aus m Schichten bestehen, abgebildet,

f) die m*n Ausgänge der Bildleiter in m Steckverbinder werden mit einer regulären Schichtstruktur so zusammengefaßt, daß genau ein Bildleiter aus jedem Meßkopfmodul im jeweiligen Steckverbinder enthalten ist

g) jeder der m optischen Steckverbinder wird über ein optisches System aus zweien und gegebenenfalls weiteren Objektiven und/oder Farbfiltern auf einen der Sensoren abgebildet,

h) jeder der m Sensoren besteht aus einer regulären Struktur mit mindestens n fotoempfindlichen Zeilen.

13. Anordnung zur zeilenweisen Synchronisation der Bildaufnahme von Monochrom- und Farbaufnahmen mit lichtempfindlichen Sensoren (26,26') zum Abtasten eines relativ zu den Sensoren bewegbaren Objektes (II), mit einem Timer, einem Rechner und einem Impulse erzeugenden inkrementalen Geber sowie einem erzeugten Zeilenraster als Sollraster,
gekennzeichnet durch
eine das Zeilenraster erzeugende programmierbare Zählanordnung, die einen Meßzeilenzähler (CT2) und einen diesem vorgeschalteten weiteren Zähler (CT1) umfaßt und der Rechner und die programmierbare Zählanordnung zum Zeitpunkt des Eintreffens eines Impulses des inkrementalen Gebers die Phasenlage des durch die Zählanordnung erzeugten Zeilenrasters zu messen, diese mit einem zugeordneten errechneten oder tabellierten Sollwert einer Sollwerttabelle zu vergleichen und die so erhaltene Phasendifferenz dazu zu benutzen imstande sind, um den dem Meßzeilenzähler (CT2) vorgeschalteten Zähler (CT1) in seinem Zählumfang zu beeinflussen und daraus die exakte Lage von Meßzeilen zu generieren.

14. Anordnung nach Anspruch 13, dadurch gekennzeichnet,
daß die lichtempfindlichen Sensoren CCD-Kameras sind, die aus mehreren kompakten Kameramodulen bestehen, die nebeneinander angeordnet sind.

15. Anordnung nach Anspruch 13, gekennzeichnet durch die Merkmale:

a) n erste Objektive und n zeilentörmige Bildleiter sowie n Meßmodule zum Abbilden des Objektes durch die n ersten Objektive in den n Meßmodulen auf die n Bildleiter

b) die n Bildleiter sind ausgangsseitig zu einem optischen Steckverbinder zusammengefügt, wobei die n zeilenförmigen Bildleiter eine reguläre Schichtstruktur bilden,

c) ein optisches Relaissystem sowie zweite und gegebenenfalls weitere Objektive, Strahl- und/ oder Farbteiler und/oder Farbfilter, denen m Sensoren nachgeschaltet sind

d) jeder der m Sensoren besteht aus einer regulären Struktur mit mindestens n fotoempfindlichen Zeilen
oder

e) n erste Objektive und n zeilenförmige Bildleiter, die aus m Schichten bestehen sowie m Meßmodule zum Abbilden des Objektes durch die n ersten Objektive in den m Meßmodulen auf die n Bildleiter

f) die m∗n Ausgänge der Bildleiter in m Steckverbindern sind mit einer regulären Schichtstruktur so zusammengefaßt, daß genau ein Bildleiter aus jedem Meßkopfmodul im jeweiligen Steckverbinder enthalten ist

g) ein optisches System aus zwei und gegebenenfalls weiteren Objektiven und/oder Farbfiltern, denen die Sensoren nachgeschaltet sind zum Abbilden eines jeden der m optischen Steckverbinder über das optische System auf einen der Sensoren

h) jeder der m Sensoren besteht aus einer regulären Struktur mit mindestens n fotoempfindlichen Zeilen.

16. Anordnung nach Anspruch 15, dadurch gekennzeichnet,
daß das optische Relaissystem eine Empfangsoptik ist.

**Claims**

1. Process for the line-by-line synchronization of the recording of monochrome and color images by means of light-sensitive sensors (26, 26'), relative to which an object (II) to be scanned is moving, using a timer, a computer and an incremental pulse generator, whereby a line raster is generated as the set point raster,
characterized in that
the line raster is generated by a programmable counting arrangement comprising a measurement line counter (CT2) and a preceding additional counter (CT1), and, at the point in time when a pulse from the incremental generator arrives, the computer and the programmable counting arrangement measure the phase position of the line raster generated by the counting arrangement, compare this with an associated calculated or tabulated set point from a set point table and use the phase difference thus obtained to influence the counting range of the counter (CT1) which precedes the measurement line counter (CT2), in order to generate the exact position of measurement lines on this basis.

2. Process according to Claim 1, characterized in that the timer breaks down the measurement lines into two or more scanning lines when the integration time of the light-sensitive sensor (26, 26') within the measurement line, yields an exposure above the overload range of the sensor.

3. Process according to Claim 1 or 2, characterized in that
the timer shifts the phase of the pulses of the light-sensitive sensor in such a way that the center of gravity of the weight function of the sensitivity of the scanning line remains locally constant at a variable transport rate of the object (II) over each image line to be scanned.

4. Process according to Claim 1, characterized in that, with each slope of a pulse from the incremental generator, a phase comparison is carried out between the position of the moved object, for example, printing cylinder (II), and the current position of the line raster.

5. Process according to Claim 4, characterized in that the phase comparison is carried out according to the following relation:

$$\overline{\varphi}_i * (R + k * d) = y_{off} + j * yb + yl \qquad [1]$$

wherein:

| | |
|---|---|
| $\overline{\varphi}_i =$ | expectation value of the angle from the incremental generator |
| $2R =$ | diameter of the cylinder |
| $k =$ | constant $0 < k < 1$ |
| $d =$ | paper thickness |
| $yb =$ | line width |
| $j =$ | line index, line address |
| $yl =$ | fragmented rational part of the line address |
| $y_{off} =$ | offset |

6. Process according to Claim 4, characterized in that, in order to avoid rounding errors, for each slope of a pulse from the incremental generator, both the entire as well as the fragmented rational part of the line address is evaluated.

7. Process according to Claims 5 and 6, characterized in that
the systematic components of the errors are learned in a teach-in process and, for this purpose, the expectational values for angle $\overline{\varphi}_i$ are averaged over several revolutions in a computer and placed in a table, whereby the set points of the entire and of the fragmented rational part of the line address are calculated according to Equation [1] on the basis of the expectational values for each pulse from the incremental generator, the table determined in this manner is then stored in the computer and is drawn up anew according to Equation [1] for each new set of parameters ($y_{off}$, k, d, yb).

8. Process according to Claim 7, characterized in that, in order to correct geometry errors, a non-linear correction function is superimposed on the association of the expectational value of the angle $\overline{\varphi}_i$ and $y_{off}, \frac{yl}{yb}$.

**9.** Process according to Claim 1, characterized in that the phase difference Δy(t) is smoothed by means of a moving average filter according to Equation [3] below and, from this value, a new current line length is calculated according to Equation [4] below, which is transmitted via the interface to the counter (CT1), whereby the phase difference Δy(t) is smoothed according to Equation [3] below

$$\Delta ym(i) = \tau * \Delta yi + \Delta ym(i-1) \qquad [3]$$

wherein:

$\Delta ym(i) =$      moving average
$\tau =$      time constant

and the new current line length is calculated according to Equation [4] below

$$\langle RG(yz)\rangle: = \langle RG(yz)\rangle + \gamma * \Delta ym(i) \qquad [4]$$

wherein:

$\langle RG(yz)\rangle =$      content of the 1/0 register for controlling the counting range of CT1
$\gamma =$      control amplification.

**10.** Process according to Claim 1, characterized in that, on the basis of the measurement of the time duration of the preceding measurement line, an estimate is made of the optimal breakdown of the integration regimen for the current measurement line, whereby the computer reads the time duration of the preceding measurement line and, on this basis, calculates the intervals of the scanning lines, which are subsequently accumulated pixel-by-pixel within the confines of the measurement line and the corresponding dark current values are subtracted and the value thus obtained is divided by the effective integration time.

**11.** Process according to Claim 10, characterized in that
the intervals of the scanning lines of the measurement line are calculated according to Equation [5]

$$\langle RG(t_{int})\rangle: = t_{scan}/[1 + int(t_{scan}/t_{int}max)] \qquad [5]$$

wherein:

$int =$      function integer, whole part of
$t_{int} =$      integration time of the CCD line
$t_{scan} =$      scanning time for one measurement line

$t_{int}max =$      maximum integration time of the CCD line, limited by overload

**12.** Process according to Claim 1, characterized by the following features:

a) the object is mapped via n first objectives in n measuring modules onto n linear image conductors,
b) the n image conductors are combined on the output side to an optical plug connector in such a way that the n linear image conductors form a regular layered structure,
c) the outputs of the image conductors are mapped via an optical relay system onto m sensors via second and optionally additional objectives, beam splitters and/or color splitters and/or color filters,
d) each of the m sensors consists of a regular structure with at least n photosensitive CCD lines,
or
e) the object is mapped via n first objectives in m measuring modules onto n linear image conductors which consist of m layers,
f) the m*n outputs of the image conductors in m plug connectors are combined with a regular layered structure in such a way that precisely one image conductor from each measuring head module is contained in the appertaining plug connector,
g) each of the m optical plug connectors is mapped onto one of the sensors via an optical system consisting of two and optionally additional objectives and/or color filters,
h) each of the m sensors consists of a regular structure with at least n photosensitive lines.

**13.** Arrangement for the line-by-line synchronization of the recording of monochrome and color images by means of light-sensitive sensors (26, 26') for scanning an object (II) that is movable relative to the sensors, using a timer, a computer and an incremental pulse generator as well as a line raster generated as the set point raster,
characterized by
a programmable counting arrangement that generates the line raster and that comprises a measurement line counter (CT2) and a preceding additional counter (CT1), and, at the point in time when a pulse from the incremental generator arrives, the computer and the programmable counting arrangement can measure the phase position of the line raster generated by the counting arrangement, can compare this with an associated calculated or tabulated set point from a set point table and can use the phase difference thus obtained to influence the counting range of the counter (CT1) preceding the measurement line counter (CT2), and can generate the exact position of measurement lines on that basis.

14. Arrangement according to Claim 13, characterized in that
the light-sensitive sensors are CCD cameras consisting of several compact camera modules arranged next to each other.

15. Arrangement according to Claim 13, characterized by the features:

a) n first objectives and n linear image conductors as well as n measuring modules for mapping the object through the n first objectives in the n measuring modules onto the n image conductors,
b) the n image conductors are combined on the output side to an optical plug connector, whereby the n linear image conductors form a regular layered structure,
c) an optical relay system as well as second and optionally additional objectives, beam splitters and/or color splitters and/or color filters followed by m sensors,
d) each of the m sensors consists of a regular structure with at least n photosensitive lines,
or
e) n first objectives and n linear image conductors consisting of m layers as well as m measuring modules for mapping the object through the n first objectives in the m measuring modules onto the n image conductors,
f) the m*n outputs of the image conductors in m plug connectors are combined with a regular layered structure in such a way that precisely one image conductor from each measuring head module is contained in the appertaining plug connector,
g) an optical system consisting of two and optionally additional objectives and/or color filters, followed by the sensors for mapping each of the m optical plug connectors via the optical system onto one of the sensors,
h) each of the m sensors consists of a regular structure with at least n photosensitive lines.

16. Arrangement according to Claim 15, characterized in that
the optical relay system is a receiving lens.

## Revendications

1. Procédé pour la synchronisation ligne par ligne de l'enregistrement de prise de vues monochromes et en couleurs avec des capteurs photosensibles (26,26'), par rapport auxquels se déplace un objet (II) à explorer, moyennant l'utilisation d'une minuterie, d'un calculateur et d'un générateur incrémental produisant des impulsions, une trame de lignes étant produite en tant que trame de consigne, caractérisé en ce
que la trame de lignes est produite par un dispositif de comptage programmable, qui comprend un compteur de lignes de mesure (CT2) et un autre compteur (CT1) branché en amont du capteur de lignes de mesure, et le calculateur et le dispositif de comptage programmable mesurent, à l'instant de l'apparition d'une impulsion du générateur incrémental, la position de phase de la trame de lignes, produite par le dispositif de comptage, comparent cette position de phase à une valeur de consigne associée calculée ou tabulée d'un tableau de valeurs de consigne et utilisent la différence de phase ainsi obtenue pour influer sur la capacité de comptage du compteur (CT1) branché en amont du compteur de lignes de mesure (CT2), afin de produire, à partir de là, la position précise de lignes de mesure.

2. Procédé selon la revendication 1, caractérisé en ce que la minuterie subdivise des lignes de mesure en deux ou plusieurs lignes d'exploration lorsque la durée d'intégration du capteur photosensible (26,26') fournit, à l'intérieur d'une ligne de mesure, un éclairement supérieur à la limite de modulation du capteur.

3. Procédé selon la revendication 1 ou 2, caractérisé en ce que la minuterie décale la phase des impulsions de cadence du capteur photosensible de sorte que le barycentre de la fonction de pondération de la sensibilité des lignes d'exploration reste localement constant sur la ligne d'image respective devant être explorée, dans le cas d'une vitesse variable de transport de l'objet (II).

4. Procédé selon la revendication 1, caractérisé en ce que lors de l'apparition de chaque flanc d'une impulsion du générateur incrémental, une comparaison de phase est exécutée entre la position de l'objet déplacé, par exemple un vérin (II), et la position actuelle de la trame de lignes.

5. Procédé selon la revendication 4, caractérisé en ce que la comparaison de phase est exécutée conformément à la relation suivante :

$$\bar{\varphi}_i * (R + k * d) = y_{off} + j * yb + yl \qquad [1]$$

avec :

$\bar{\varphi}_i$ - valeur escomptée de l'angle du générateur incrémental

2R - diamètre du vérin

k - constante 0 < k < 1

d - épaisseur du papier

yb - largeur des lignes

j - index de ligne, adresse de ligne

yl - partie fractionnaire rationnelle de l'adresse de ligne

$y_{off}$ - décalage.

6. Procédé selon la revendication 4, caractérisé en ce que pour éviter des erreurs d'arrondi pour chaque flanc d'une impulsion du générateur incrémental, on évalue aussi bien la partie rationnelle entière que la partie rationnelle fractionnaire de l'adresse de ligne.

7. Procédé selon les revendications 5 et 6, caractérisé en ce que les composantes systématiques des erreurs sont apprises dans un processus teach-in (c'est-à-dire d'enseignement) et à cet effet la moyenne des valeurs escomptées pour les angles $\bar{\varphi}$ sur plusieurs rotations est formée dans un calculateur et est mémorisée dans un tableau, auquel cas les valeurs de consigne de la partie rationnelle entière et de la partie rationnelle fractionnaire de l'adresse de ligne sont calculées à partir des valeurs escomptées pour chaque impulsion du générateur incrémental conformément à la relation [1], le tableau ainsi déterminé est conservé dans le calculateur et est établi à nouveau, pour chaque ensemble de paramètres ($y_{off}$, k, d, yb) conformément à la relation [1].

8. Procédé selon la revendication 7, caractérisé en ce que pour corriger des erreurs géométriques, on superpose une fonction de correction non-linéaire à l'association de la valeur escomptée de l'angle $\bar{\varphi}_i$ et de $y_{off}$, $\frac{yl}{yb}$.

9. Procédé selon la revendication 1, caractérisé en ce que la différence de phase $\Delta y(t)$ est lissée au moyen d'un filtre de lissage de valeur moyenne glissante conformément à la relation suivante [3] et qu'à partir de cette valeur est calculée, conformément à la relation suivante [4], une nouvelle longueur actuelle de ligne, qui est délivrée au compteur (CT1) par l'intermédiaire de l'interface, la différence de phase $\Delta y(t)$ étant lissée conformément à la relation suivante [3]

$$\Delta ym = \tau * \Delta yi + \Delta ym(i-1) \qquad [3]$$

avec

$\Delta ym(i)$ - valeur moyenne glissante

$\tau$ - constante de temps

et la nouvelle longueur actuelle de ligne est calculée conformément à la relation suivante [IV]

$$\langle RG(yz)\rangle := \langle RG(yz)\rangle + \gamma * \Delta ym(i) \qquad [4]$$

avec

$\langle RG(yz)\rangle$ - contenu du registre d'entrée/sortie pour la commande pour la capacité de comptage de CT1,

$\gamma$ - amplification de régulation.

10. Procédé selon la revendication 1, caractérisé en ce qu'une estimation de la subdivision optimale du régime d'intégration pour la ligne actuelle de mesure est déterminée sur la base de la mesure de la durée de la ligne de mesure respectivement précédente, le calculateur lisant la durée de la ligne de mesure précédente et calculant, à partir de là, l'intervalle des lignes d'exploration, qui sont ensuite cumulées, pour chaque point d'image, dans le cadre de la ligne de mesure, et les valeurs correspondantes de courant d'obscurité sont soustraites, et la valeur ainsi obtenue est divisée par la durée effective d'intégration.

11. Procédé selon la revendication 10, caractérisé en ce que les intervalles des lignes d'exploration de la ligne de mesure sont calculés conformément à la relation [5]

$$\langle RG(tint)\rangle := tscan / [1 + int(tscan/tintmax)]$$

   [5]

avec

int - fonction entier, partie entière

tint - durée d'intégration de la ligne CCD

tscan - durée d'exploration d'une ligne de mesure

tint max - durée d'intégration maximale, limitée par la modulation, de la ligne CCD.

12. Procédé selon la revendication 1, caractérisé par les caractéristiques suivantes :

a) l'image de l'objet est formée par l'intermédiaire de n premiers objectifs dans n modules de mesure dans n guides de transmission d'images en forme de lignes,

b) les n guides de transmission d'images sont réunis côté sortie pour former un connecteur optique de telle sorte que les n guides de transmission d'images en forme de lignes forment une structure régulière à couches,

c) l'image des signaux de sortie des guides de transmission d'images est formée par l'intermédiaire d'un système de relais optique sur m capteurs par l'intermédiaire de seconds objectifs, diviseurs de faisceau et/ou séparateurs de couleurs et/ou de filtres colorés et éventuellement d'autres objectifs, diviseurs de faisceau et/ou séparateurs de couleurs et/ou filtres colorés,

d) chacun des m capteurs est constitué par une structure régulière comportant au moins n lignes CCD photosensibles, ou

e) l'image de l'objet est formée par l'intermédiaire de n objectifs dans m modules de mesure dans n guides de transmission d'images en forme de lignes, qui sont constituées par m couches,

f) les m∗n sorties des guides de transmission d'images dans m connecteurs sont réunies avec une structure laminaire régulière de sorte que précisément un guide de transmission d'images constitué par chaque module de tête de mesure est contenu dans le connecteur respectif,

g) l'image de chacun des m connecteurs optiques est formée sur l'un des capteurs par l'intermédiaire d'un système optique formé de deux objectifs et/ou filtres colorés et éventuellement des objectifs et/ou filtres colorés supplémentaires,

h) chacun des m capteurs est constitué par une structure régulière comportant au moins n lignes photosensibles.

13. Dispositif pour la synchronisation ligne par ligne de l'enregistrement de prise de vues monochromes et en couleurs avec des capteurs photosensibles (26,26'), pour l'exploration d'un objet (II) déplaçable par rapport aux capteurs, comportant une minuterie, un calculateur et un générateur incrémental produisant des impulsions, ainsi qu'une trame de lignes obtenue en tant que trame de consigne, caractérisé par

un dispositif de comptage programme produisant la trame de ligne et qui contient un compteur de lignes de mesure (CT2) et un autre compteur (CT1) branché en amont du compteur de lignes de mesure, et le compteur et le dispositif de comptage programmable étant à même de mesurer la position de phase de la trame de ligne produite par le dispositif de comptage, comparer cette position à une valeur de consigne associée, calculée ou stabilisée, d'un tableau de valeurs de mesure et utiliser la différence de phase ainsi obtenue, pour influer sur la capacité de comptage du compteur (CT1) branché en amont du compteur de lignes de mesure (CT2) et produit, à partir de là, la position précise de lignes de mesure.

14. Dispositif selon la revendication 13, caractérisé en ce que les capteurs photosensibles sont des appareils de prise de vues CCD, qui sont constitués de plusieurs modules compacts d'appareils de prise de vues, qui sont disposés côte-à-côte.

15. Dispositif selon la revendication 13, caractérisé par les caractéristiques :

a) n premiers objectifs et n guides de transmission d'images en forme de lignes ainsi que n modules de mesure pour la formation de l'image de l'objet au moyen des n premiers objectifs dans les n modules de mesure dans les n guides de transmission d'images,

b) les n guides de transmission d'images en forme de lignes sont rassemblés côté sortie pour former un connecteur optique, les n guides de transmission d'images en forme de lignes formant une structure régulière à couches,

c) un système de relais optique ainsi que des seconds objectifs, diviseurs de faisceau et/ou séparateurs de couleurs et/ou filtres colorés et éventuellement d'autres objectifs, diviseurs de faisceau et/ou séparateurs de couleurs et/ou filtres colorés, en aval desquels sont montés m capteurs,

d) chacun des m capteurs est constitué par une structure régulière comportant au moins n lignes photosensibles, ou

e) n premiers objectifs et n guides de transmission d'images en forme de lignes, qui sont constituées de m couches, ainsi que m modules de mesure servant à former l'image de l'objet au moyen des n premiers objectifs dans les m modules de mesure dans les m guides de transmission d'images,

f) les m∗n sorties des guides de transmission d'images dans m connecteurs sont rassemblées avec une structure régulière à couches de sorte que précisément un guide de transmission d'images constitué par chaque module de tête de mesure est contenu dans le connecteur respectif,

g) un système optique formé de deux objectifs et/ou filtres colorés et éventuellement d'autres objectifs et/ou filtres colorés, en aval duquel sont montés les capteurs, pour la formation de l'image de chacun des m connecteurs optiques, par l'intermédiaire du système optique, sur l'un des capteurs,

h) chacun des m capteurs est constitué par une structure régulière comportant au moins n lignes photosensibles.

16. Dispositif selon la revendication 15, caractérisé en ce que le système de relais optique est un système optique de réception.

Fig. 1

Fig. 2a

Fig. 2b

Fig. 3

**Fig. 4a**

**Fig. 4b**

Fig. 6

Fig. 5